# EUROPÄISCHE PATENTSCHRIFT

(11) **EP 1 169 385 B1**
(45) Veröffentlichungstag und Bekanntmachung des Hinweises auf die Patenterteilung: **09.08.2006**
(21) Anmeldenummer: 00916940.0
(22) Anmeldetag: 14.03.2000
(51) Int. Cl.: C08K 5/523, C08L 69/00

(54) **FLAMMWIDRIGE MIT PFROPFPOLYMERISAT MODIFIZIERTE POLYCARBONAT-FORMMASSEN**
FLAME-RESISTANT POLYCARBONATE MOULDING MATERIALS MODIFIED WITH GRAFT POLYMERS
MATIERES MOULABLES A BASE DE POLYCARBONATE, MODIFIEES A L'AIDE DE POLYMERES GREFFES ET RESISTANTES AUX FLAMMES

(30) Priorität: 27.03.1999 DE 19914137
(43) Veröffentlichungstag der Anmeldung: 09.01.2002
(73) Patentinhaber: Bayer MaterialScience AG, 51368 Leverkusen (DE)
(72) Erfinder: ECKEL, Thomas, D-41540 Dormagen (DE); ZOBEL, Michael, 50823 Köln (DE); WITTMANN, Dieter, D-51375 Leverkusen (DE); DERR, Torsten, D-41541 Dormagen (DE); KELLER, Bernd, D-47608 Geldern (DE)
(86) Internationale Anmeldenummer: PCT/EP2000/002242
(87) Internationale Veröffentlichungsnummer: WO 2000/058395

(56) Entgegenhaltungen:
- EP-A- 0 754 531
- EP-A- 0 755 977
- EP-A- 0 953 604
- WO-A-99/07778
- WO-A-99/07782

## Beschreibung

Die vorliegende Erfindung betrifft flammwidrige mit Pfropfpolymerisat modifizierte Polycarbonat-Formmassen, enthaltend Phosphor-Verbindungen und speziell zubereitete fluorierte Polyolefine, die einen ausgezeichneten Flammschutz und sehr gute mechanische Eigenschaften wie Kerbschlagzähigkeit, Reißdehnung und ein sehr gutes Spannungsrißverhalten aufweisen.

Diphosphate sind als Flammschutzadditive bekannt. In JP 59 202 240 wird die Herstellung eines solchen Produktes aus Phosphoroxichlorid, Diphenolen wie Hydrochinon oder Bisphenol A und Monophenolen wie Phenol oder Kresol beschrieben. Diese Diphosphate können in Polyamid oder Polycarbonat als Flammschutzmittel eingesetzt werden. In dieser Literaturstelle findet sich jedoch kein Hinweis auf eine verbesserte Spannungsrißbeständigkeit durch Zusatz des oligomeren Phosphats zu Polycarbonat-Formmassen.

EP-A 363 608 beschreibt flammwidrige Polymermischungen aus aromatischen Polycarbonat, styrolhaltigem Copolymer oder Pfropfcopolymer sowie oligomeren Phosphaten als Flammschutzmittel. Es wird allgemein erwähnt, daß Tetrafluorethylenpolymere zugesetzt werden können.

In EP-A 0 767 204 werden flammwidrige Polyphenylenoxid- (PPO)- bzw. Polycarbonat-Mischungen beschrieben, die eine Mischung aus Oligophosphaten (Typ Bisphenol A (BPA)-Oligophosphat) und Monophosphaten als Flammschutzmittel enthalten. Hohe Gehalte an Flammschutzmittel führen zu nachteiligen mechanischen Eigenschaften (Kerbschlagzähigkeit, Spannungsrißverhalten) und reduzierter Wärmeformbeständigkeit.

EP-A 0 611 798 und WO 96/27600 beschreiben Formmassen, die neben Polycarbonat oligomere, endständig alkylierte Phosphorsäureester vom BPA-Typ enthalten.

Aufgrund der Alkylierung sind zur Erzielung eines wirksamen Flammschutzes hohe Anteile notwendig, was für viele anwendungstechnische Eigenschaften (Mechanik, Wärmeformbeständigkeit) sehr nachteilig ist.

In EP-A 0 754 531 werden verstärkte PC/ABS-Formmassen beschrieben, die für Präzisionsteile geeignet sind. Als Flammschutzmittel werden unter anderem auch Oligophosphate des BPA-Typs verwendet. Die hohen Füllstoffanteile wirken sich sehr nachteilig auf mechanische Eigenschaften wie reißdehnung oder Kerbschlagzähigkeit aus.

EP-A 771 851 beschreibt Formmassen, die aromatisches Polycarbonat, Pfropfpolymer auf Basis von Dien-Kautschuk,SAN-Copolymer, ein Phosphat und Tetrafluorethylen-Polymere enthalten, wobei das Polycarbonat unterschiedliche Molekulargewichte hat. Als Vorteil wird Beständigkeit gegen Schlagzähigkeitsverlust, gegen Hitze und Feuchtigkeit offenbart.

In EP-A 755 977 werden Polymermischungen aus aromatischem Polycarbonat, Pfropfcopolymer mit einem Kautschukgehalt < 25 % sowie oligomeren Phosphaten mit Füllgehalt < 8 % und einem N-Wert von N = 1 - 35 als Flammschutzadditive beschrieben. Durch die Begrenzung des Anteiles von Phosphaten als Flammschutzmittel sind gravierende Nachteile im Flammschutz zu erwarten.

EP-A 747 424 beschreibt thermoplastische Harze, die Phosphatverbindungen mit einem Molekulargewicht von ungefähr 500 bis 2 000 und von Phosphatverbindungen mit einem Molekulargewicht von ungefähr 2 300 bis 11 000 als Flammschutzmittel enthalten, wobei eine Vielzahl von thermoplastischen Harzen aufgezählt werden. Durch die hohen Molekulargewichte der Flammschutzmittel kann es auch hier zu Nachteilen im Flammschutz kommen.

Aufgabe der vorliegenden Erfindung ist es, flammgeschützte mit Pfropfpolymerisat modifizierte PC-Formmassen bereitzustellen, welche sich bei hoher Wärmeformbeständigkeit durch sehr gute mechanische Eigenschaften, ein hohes Maß an Flammschutz und ein sehr gutes Spannungsrißverhalten auszeichnen. Damit sind diese Formmassen insbesondere für solche Anwendungen geeignet, bei denen Kontakt mit speziellen Medien wie z.B. Lösungsmittel, Schmiermittel, Reinigungsmittel usw. auftreten kann.

Es wurde nun gefunden, daß mit Pfropfpolymerisat modifizierte Polycarbonat-Formmassen, die Phosphor-Verbindungen und spezielle Zubereitungen von fluorierten Polyolefinen enthalten, das gewünschte Eigenschaftsprofil aufweisen.

Gegenstand der Erfindung sind daher mit Pfropfpolymerisat modifizierte Polycarbonat-Formmassen enthaltend
A) 40 bis 99 Gew.-Teile aromatisches Polycarbonat und/oder Polyestercarbonat
B) 0,5 bis 60 Gew.-Teile Pfropfpolymerisat von
   B.1) 5 bis 95 Gew.-% eines oder mehrerer Vinylmonomeren auf
   B.2) 95 bis 5 Gew.-% einer oder mehrerer Pfropfgrundlagen mit einer Glasumwandlungstemperatur <10°C,
C) 0 bis 45 Gew.-Teile mindestens eines thermoplastischen Polymers, ausgewählt aus der Gruppe der Vinyl(co)polymerisate und Polyalkylenterephthalate,
D) 0,5 bis 20 Gew.-Teilen einer Phosphorverbindung der Formel 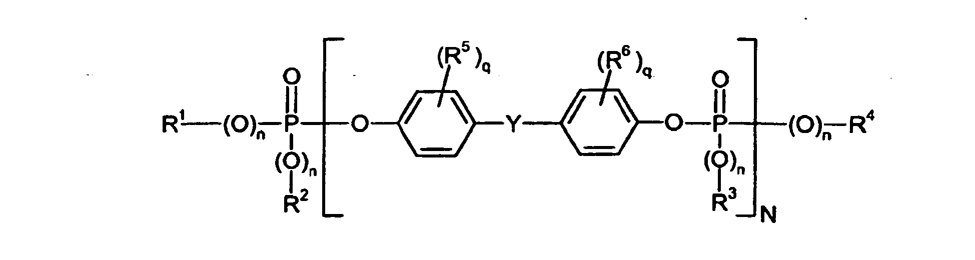 worin
   - R¹, R², R³ und R⁴,: unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇₋C₁₂-Aralkyl,
   - n: unabhängig voneinander 0 oder 1,
   - q: unabhängig voneinander 0, 1, 2, 3 oder 4,
   - N: 0, 9 bis 10 ist,
   - R⁵ und: R⁶ unabhängig voneinander C₁-C₄-Alkyl oder Halogen bedeuten,
   - Y: C₁-C₇-Alkyliden, C₁-C₇-Alkylen, C₅-C₁₂-Cycloalkylen, C₅-C₁₂-Cycloalkyliden, -O-, -S-, -SO-, -SO₂- oder -CO- bedeutet,
   und
E) fluoriertes Polyolefin oder Polyolefingemisch
   1) als koagulierte Mischung mit mindestens einer der Komponenten A oder C, wobei das fluorierte Polyolefin E bzw. Polyolefingemisch als Emulsion mit mindestens einer Emulsion der Komponenten A oder C gemischt und anschließend koaguliert wird
      oder
   2) als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze compoundiert wird.

Bevorzugt sind thermoplastische Formmassen enthaltend
A) 40 bis 99, vorzugsweise 60 bis 98,5 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat von
   B.1) 5 bis 95, vorzugsweise 30 bis 80 Gew.-% eines oder mehrerer Vinylmonomeren auf
   B.2) 95 bis 5, vorzugsweise 20 bis 70 Gew.-% einer oder mehrerer Pfropfgrundlagen mit einer Glasumwandlungstemperatur <10°C, vorzugsweise <0°C, besonders bevorzugt < -20°C,
C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate.
D) 0,5 bis 20 Gew.-Teilen, bevorzugt 1 bis 18 Gew.-Teilen, besonders bevorzugt 2 bis 16 Gew.-Teilen einer Phosphorverbindung der Formel (I) 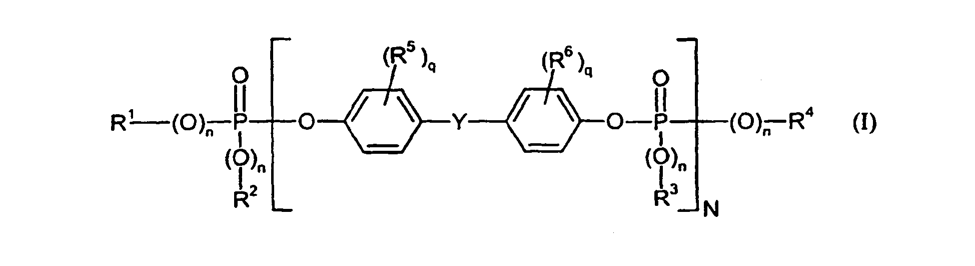 worin R¹ bis R⁶, Y, n, N, und q die oben angegebenene Bedeutung haben.
E) 0,01 bis 3, bevorzugt 0,05 bis 2, besonders bevorzugt 0,1 bis 0,8 Gew.-Teile fluorierte Polyolefine als
   E.1) koagulierte Mischung mit mindestens einer der Komponenten A bis C, wobei das fluorierte Polyolefin oder Polyolefingemisch E als Emulsion mit mindestens einer Emulsion der Komponenten A bis C gemischt und anschließend koaguliert wird
      oder
   E.2) als Präcompound mit mindestens einer der Komponenten A bis C, wobei das fluorierte Polyolefine oder Polyolefingemisch E als Pulver mit einem Pulver oder einem Granulat mindestens einer der Komponenten A bis C vermischt und schmelzcompoundiert wird.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden. nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (III) 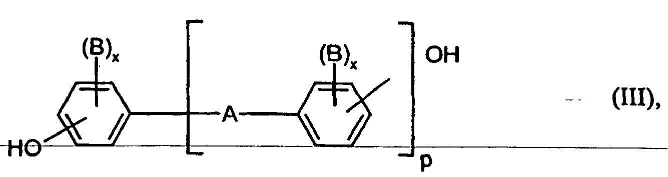 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (IV) oder (V) 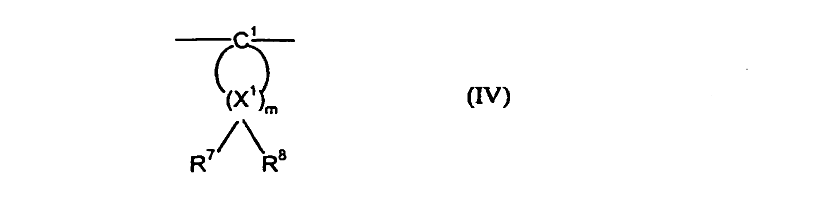 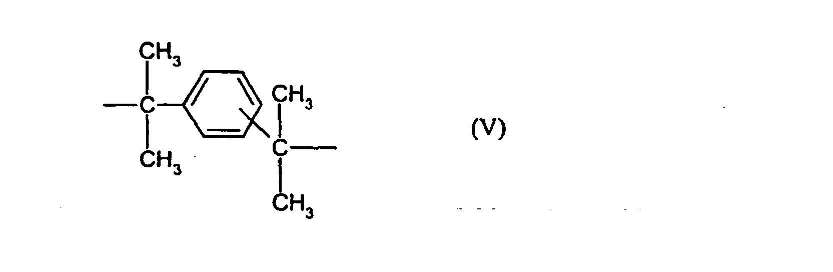
- B: eweils C₁-C₁₂-Alkyl, vorzugsweise Methyl, Halogen, vorzugsweise Chlor und/oder Brom
- x: weils unabhängig voneinander 0, 1 oder 2,
- p: 1 oder 0 sind, und
- R⁷ und: R⁸ für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁷ und R⁸ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,S-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfaßt ein oder mehrere Pfropfpolymerisate von
B.1 5 bis 95, vorzugsweise 30 bis 80 Gew.-%, wenigstens eines Vinylmonomeren auf
B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 5 µm, vorzugsweise 0,10 bis 0,5 µm, besonders bevorzugt 0,20 bis 0,40 µm.

Monomere B.1 sind vorzugsweise Gemische aus
B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder (Meth)Acrylsäure-(C₁-C₈)-Alkylester (wie z.B. Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), bevorzugt Butadien-Styrol-Copolymere, mit der Maßgabe, daß die Glasübergangstemperatur der Komponente B.2 unterhalb <10°C, vorzugsweise <0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁₋C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfaßt ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder (Meth)Acrylsäure-(C₁-C₈)-Alkylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁₋C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte M̅_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4-Diphenyldicarbonsäure, Bemsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.%, vorzugsweise 1 bis 30 Gew.-%, Polyethylenterephthalat und 50 bis 99 Gew.-%, vorzugsweise 70 bis 99 Gew.%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die erfindungsgemäßen Formmassen enthalten als Flammschutzmittel Phosphorverbindungen gemäß Formel (I), 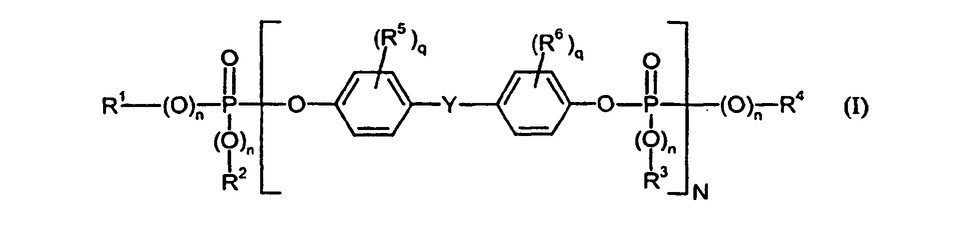 in der die Reste die o.g. Bedeutungen haben.

Die erfindungsgemäß geeigneten Phosphorverbindungen gemäß Komponente D sind generell bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beistein, Bd. 6, S. 177).

Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁-C₄₋Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für C₁-C₇-Alkylen, insbesondere für Isopropyliden oder Methylen.

n in der Formel (I) kann unabhängig voneinander 0 oder 1 sein, vorzugsweise ist n gleich 1.

q kann 0, 1, 2, 3 oder 4 sein, vorzugsweise ist q 0, 1 oder 2, besonders bevorzugt ist q=0.

N kann Werte von 0,9 bis 10, vorzugsweise 0,95 bis 5, insbesondere 1 bis 3 annehmen. Als erfindungsgemäße Komponente D können auch Mischungen verschiedener Phosphate eingesetzt werden. In diesem Fall hat N einen Durchschnittswert. In diesem Gemisch können auch Monophosphorverbindungen (N=O) enthalten sein.

Die mittleren N-Werte können bestimmt werden, in dem mittels geeigneter Methode [Gaschromatografie (GC), High Pressure Liquid Chromatography (HPLC), Gaspermeationschromatographie (GPC)] die Zusammensetzung der Phosphat-Mischung (Molekulargewichtsverteilung) bestimmt wird und daraus die Mittelwerte für N berechnet werden.

### Komponente E

Als weitere Komponente werden fluorierte Polyolefine zugesetzt.

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0.05 bis 1 000, vorzugsweise 0,08 bis 20 µm. Im allgemeinen haben die fluorierten Polyolefine E eine Dichte von 1,2 bis 2,3 g/cm³. Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E werden in Form von Emulsion mit mittleren Teilchendurchmesser von 0,05 bis 20 µm, vorzugsweise 0,08 bis 10 µm, und eine Dichte von 1,2 bis 1,9 g/cm³ oder in Form von Pulver mit mittleren Teilchendurchmesser von 100 bis 1 000 µm und Dichten von 2,0 g/cm³ bis 2,3 g/cm³ eingesetzt.

Erfindungsgemäß werden die fluorierten Polyolefine E in Form spezieller Zubereitungen eingesetzt:
E.1) als koagulierte Mischung mit mindestens einer der Komponenten A bis C, wobei das fluorierte Polyolefin E bzw. Polyolefingemisch als Emulsion mit mindestens einer Emulsion der Komponenten A bis C gemischt und anschließend koaguliert wird.
   oder
E.2) als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze, im allgemeinen bei Temperaturen von 200°C bis 330°C in den üblichen Aggregaten wie Innenkneter, Extruder oder Doppelwellenschnecken, compoundiert wird.

Bevorzugte Zubereitungen für die fluorierten Polyolefine E sind koagulierte Mischungen mit einem Pfropfpolymerisat B oder einem Vinyl(co)polymerisat C.

Zur Herstellung einer koagulierten Mischung aus B und E wird zuerst eine wäßrige Emulsion (Latex) eines Pfropfpolymerisates B mit einer feinteiligen Emulsion eines Tetrafluorethylenpolymerisates E vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente A, B und C enthält nicht den Anteil des Pfropfpolymerisats, Vinyl(co)polymerisat bzw. Polycarbonat für die koagulierte Mischung gemäß E.1 und E.2.

In der Emulsionsmischung liegt das Gleichgewichtsverhältnis Pfropfpolymerisat B bzw. (Co)polymerisate zum fluorierten Polyolefin E bei 95:5 bis 60:40, vorzugsweise 90:10 bis 50:50. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont (Wilmington, Delaware,USA) als Teflon® 30 N oder von der Firma Dyneon GmbH (Burgkichen, Deutschland) als Hostaflon® angeboten.

Bevorzugte Zubereitungen für die fluorierten Polyolefine E sind weiterhin Präcompounds mit einem Polycarbonat A oder einem Pfropfpolymerisat B oder einem Vinyl(co)polymerisat C.

Im Präcompound liegt das Verhältnis von Komponente A, B oder C zum fluorierten Polyolefin E bei 95:5 bis 60:40, vorzugsweise 90:10 bis 50:50.

Geeignete fluorierte Polyolefin-Pulver sind handelsübliche Produkte und werden beispielsweise von der Firma DuPont als Teflon® CFP 6000 N oder von der Firma Dyneon GmbH (Burgkichen, Deuthschland) als Hostaflon® TF 2071 angeboten.

Die erfindungsgemäßen Formmassen können wenigstens eines der üblichen Additive, wie Gleit- und Entformungsmittel, beispielsweise Pentaerythrittetrastearat, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt. Als Flammschutzmittel können weiterhin auch Monophosphatverbindungen, oligomere Phosphatverbindungen der Mischungen davon eingesetzt werden. Solche Phosphorverbindungen sind in EP-A 363 608, EP-A 345 522 und DE-OS 197 21 628 beschrieben.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, Füll- und Verstärkungsstoffe werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:
1. Innenausbauteile für Schienenfahrzeuge
2. Radkappen
3. Gehäuse von Kleintransformatoren enthaltenden Elektrogeräten
4. Gehäuse für Geräte zur Informationsverbreitung und -Übermittlung
5. Gehäuse und Verkleidung für medizinische Zwecke
6. Massagegeräte und Gehäuse dafür
7. Spielfahrzeuge für Kinder
8. Flächige Wandelemente
9. Gehäuse für Sicherheitseinrichtungen
10. Heckspoiler
11. Wärmeisolierte Transportbehältnisse
12. Vorrichtung zur Haltung oder Versorgung von Kleintieren
13. Formteile für Sanitär- und Badeausrüstungen
14. Abdeckgitter für Lüfteröffnungen
15. Formteile für Garten- und Gerätehäuser
16. Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Polycarbonat auf Basis Bisphenol A mit einer relativen Lösungsviskosität von 1,278, gemessen in Methylenchlorid bei 25°C und in einer Konzentration von 0,5 g/100 ml.

### Komponente B

Pfropfpolymerisat von 40 Gew.-Teilen Styrol und Acrylnitril im Verhältnis von 73:27 auf 60 Gew.-Teile teilchenförmigen vernetzten Polybutadienkautschuk (mittlerer Teilchendurchmesser d₅₀ = 0,28µm), hergestellt durch Emulsionspolymerisation.

### Komponente C

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente D

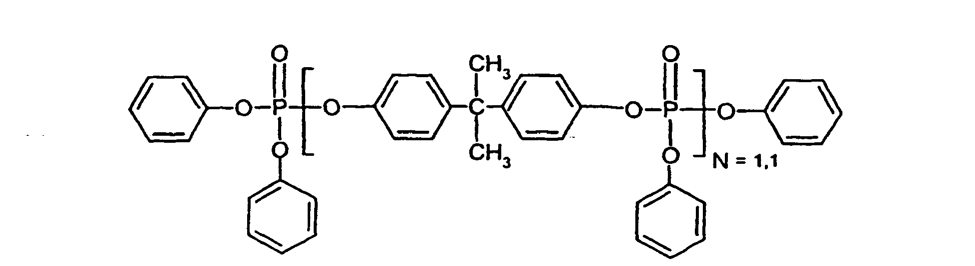

Zur Bestimmung des mittleren N-Wertes werden zuerst die Anteile der mono- und oligomeren Phosphate HPLC-Messungen bestimmt:
Säulentyp: LiChrosorp RP-8
Elutionsmittel im Gradienten: Acetonitril/Wasser 50:50 bis 100:0
Konzentration: 5 mg/ml

Aus den Anteilen der einzelnen Komponenten (Mono- und Oligophosphate) werden dann nach bekannten Verfahren die zahlengewichteten Mittelwerte berechnet.

### Komponente E

### E.1 (Vergleich)

PTFE-Pulver Teflon CFP 6000 N (DuPont, Wilmington, Delawere, USA)

### E.2

Koagulierte Mischungen aus 90 Gew.-Teilen Pfropfpolymerisat (von 40 Gew.-Teilen Styrol und Acrylnitril im Verhältnis von 73:27 auf 60 Gew-Teile teilchenförmigen vernetzten Polybutadienkautschuk mit einem mittleren Teilchendurchmesser d₅₀ = 0,28 µm) und 10 Gew.-Teilen Polytetrafluorethylenpolymerisat (Teflon® 30 N)

### E.3

Koagulierte Mischung aus 80 Gew.-Teilen Pfropfpolymerisat (wie E.2) und 20 Gew.-Teilen Polytetrafluorethylenpolymerisat (Teflon® 30 N)

### E.4

Koagulierte Mischungen aus 50 Gew.-Teilen Vinyl(co)polymerisat (von Styrol und Acrylnitril im Verhältnis von 72:28, Grenzviskosität von 0,85 dl/g gemessen in Dimethylformamid bei 20°C) und 50 Gew-Teilen Polytetrafluorethylenpolymerisat (Teflon® 30 N)

### E.5

Präcompound aus 80 Gew.-Teilen Pfropfpolymerisat (von 84 Gew.-Teilen Styrol und Acrylnitril im Verhältnis 72:28 auf 16 Gew.-Teile vemetztem Butadienkautschuk) und 20 Gew.-Teilen Polytetrafluorethylenpolymerisat (Teflon® CFP 6000 N)

### E.6

Präcompound aus 90 Gew.-Teilen Vinyl(co)polymerisat (von Styrol und Acrylnitril im Verhältnis 72:28, Grenzviskosität von 0,55 dl/g gemessen in Dimethylformamid bei 20°C) und 10 Gew-Teilen Polytetrafluorethylenpolymerisat (Teflon® CFP 6 000 N)

### E.7

Präcompound aus 90 Gew.-Teilen Polycarbonat (auf Basis Bisphenol A mit einer relativen Lösungsviskosität von 1,278, gemessen in Methylenchlorid bei 25°C und in einer Konzentration von 0,5/100 ml) und 10 Gew-Teilen Polytetrafluorethylenpolymerisat (Teflon® CFP 6 000 N)

### Herstellung und Prüfun der erfindungsgemäßen Formmassen

Das Mischen der Komponente mit den üblichen Verarbeitungshilfsmitteln erfolgt auf einer Doppelwellenextruder ZSK 32. Die Formkörper werden auf einer Spritzgießmaschine Typ Arburg 270E bei 260°C hergestellt.

Die Bestimmung der Kerbschlagzähigkeit erfolgt nach Methode ISO 180 1A an Stäben der Abmessung 80 x 10 x 4 mm³ bei Raumtemperatur.

Die Bestimmung der Wärmeformbeständigkeit nach Vicat B erfolgt gemäß DIN 53 460 an Stäben der Abmessung 80 x 10 x 4 mm³.

Die Bestimmung der Reißdehnung erfolgt nach ISO 527/DIN 53 457.

Die Flammwidrigkeit wird nach UL 94V bestimmt.

Das Spannungsrißverhalten (ESC-Verhalten) wird an Stäben der Abmessung 80 x 10 x 4 mm, Spritzgußtemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung εₓ in Prozent) und bei Raumtemperatur im Testmedium gelagert. Das Spannungsrißverhalten wird über die Rißbildung bzw. den Bruch in Abhängigkeit von der Vordehnung im Testmedium beurteilt.

**Tabelle 1**

| **Zusammensetzung und Eigenschaften der Formmassen** | | | | | | | |
|---|---|---|---|---|---|---|---|
| | **1 (Vgl.)** | **2** | **3** | **4** | **5** | **6** | **7** |
| **Komponenten [Gew.-Teile]** | | | | | | | |
| A | 68,4 | 68,4 | 68,4 | 68,4 | 68,4 | 68,4 | 64,8 |
| B | 9,4 | 5,8 | 7,8 | 9,4 | 9,0 | 9,4 | 9,4 |
| C | 9,3 | 9,3 | 9,3 | 8,9 | 8,1 | 5,7 | 9,3 |
| D | 12,5 | 1,25 | 12,5 | 12,5 | 12,5 | 12,5 | 12,5 |
| E.1 | 0,4 | | | | | | |
| E.2 | - | 4,0 | - | - | - | | - |
| E.3 | - | - | 2,0 | - | - | | - |
| E.4 | - | - | - | 0,8 | - | | - |
| E.5 | - | - | - | - | 2,0 | | - |
| E.6 | - | - | - | - | - | 4,0 | - |
| E.7 | - | - | - | | - | | 4,0 |

| **Eigenschaften:** | | | | | | | |
|---|---|---|---|---|---|---|---|
| Vicat B 120 [°C] | 102 | 103 | 103 | 103 | 103 | 102 | 103 |
| aₖ ISO 180 1 A [kJ/m²] | 42 | 47 | 50 | 48 | 48 | 46 | 45 |
| Reißdehnung [%] | 35 | 56 | 58 | 65 | 75 | 70 | 68 |
| ESC-Verhalten | | | | | | | |
| Bruch bei εx [%] | 1,8 | 2,0 | 2,4 | 2,4 | 2,4 | 2,0 | 2,0 |

| UL 94 V bei 1,6 mm | | | | | | | |
|---|---|---|---|---|---|---|---|
| Bewertung | V-2 | V-0 | V-0 | V-0 | V-0 | V-0 | V-0 |
| Gesamtnachbrennzeit [sec.] | 47 | 29 | 27 | 22 | 19 | 28 | 26 |

Die erfindungsgemäßen Formmassen, d.h. die, die aus speziellen PTFE-Zubereitungen hergestellt worden sind, zeichnen sich durch deutlich verbesserter mechanischen Eigenschaften (Kerbschlagzähigkeit (a_{κ}), Reißdehnung) höhere Spannungsrißbeständigkeit sowie verbesserten Flammschutz gemäß UL 94 V-Test (Reduktion des brennenden Abtropfens, reduzierte Nachbrennzeit) aus. Mit diesem Eigenschaftsspektrum sind die erfindungsgemäßen Formmassen insbesondere für flammwidrige Gehäuseteile mit komplizierter Geometrie geeignet, die mechanischen Belastungen und Belastungen durch Materialien ausgesetzt sind.

## Patentansprüche

1. Mit Pfropfpolymerisat modifizierte Polycarbonat-Formmassen enthaltend
A) 40 bis 99 Gew.-Teile aromatisches Polycarbonat und/oder Polyestercarbonat
B) 0,5 bis 60 Gew.-Teile Pfropfpolymerisat von
B.1) 5 bis 95 Gew.-% eines oder mehrerer Vinylmonomeren auf
B.2) 95 bis 5 Gew.-% einer oder mehrerer Pfropfgrundlagen mit einer Glasumwandlungstemperatur <10°C,
C) 0 bis 45 Gew.-Teile mindestens eines thermoplastischen Polyiners, ausgewählt aus der Gruppe der Vinyl(co)polymerisate und Polyalkylenterephthalate,
D) 0,5 bis 20 Gew.-Teilen einer Phosphorverbindung der Formel (I) 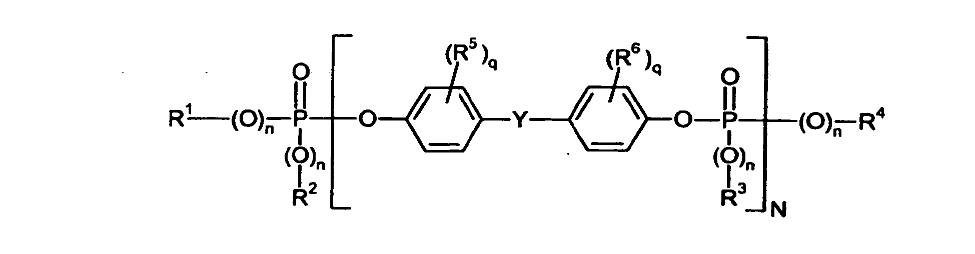 worin
R¹, R², R³ und R⁴, unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇₋C₁₂-Aralkyl,
n unabhängig voneinander 0 oder 1,
q unabhängig voneinander 0, 1, 2, 3 oder 4,
N 0, 9 bis 10 ist,
R⁵ und R⁶ unabhängig voneinander C₁-C₄-Alkyl oder Halogen bedeuten,
Y C₁-C₇-Alkyliden, C₁-C₇-Alkylen, C₅-C₁₂-Cycloalkylen, C₅-C₁₂-Cycloalkyliden, -O-, -S-, -SO-, -SO₂- oder -CO- bedeutet,
und
E) fluoriertes Polyolefin oder Polyolefingemisch
1) als koagulierte Mischung mit mindestens einer der Komponenten A oder C, wobei das fluorierte Polyolefin E bzw. Polyolefingemisch als Emulsion mit mindestens einer Emulsion der Komponenten A oder C gemischt und anschließend koaguliert wird
oder
2) als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze, im allgemeinen bei Temperaturen von 200°C bis 330°C in den üblichen Aggregaten wie Innenkneter, Extruder oder Doppelwellenschnecken, compoundiert wird.

2. Formmassen gemäß Anspruch 1, enthaltend 0,01 bis 3 Gew.-Teile fluoriertes Polyolefin in Form einer koagulierten Mischung (Komponente E.1) oder als Präcompound (Komponente E.2.).

3. Formmassen gemäß Anspruch 2, enthaltend 0,05 bis 2 Gew.-Teile fluoriertes Polyolefin in Form einer koagulierten Mischung (Komponente E.1) oder als Präcompound (Komponente E.2).

4. Formmassen nach einem der vorhergehenden Ansprüche, wobei in Formel (I) N für einen Durchschnittswert von 0,95 bis 5 steht.

5. Formmassen nach einem der vorhergehenden Ansprüche, wobei in Formel (I) N für einen Durchschnittswert von 1 bis 3 steht.

6. Formmassen nach einem der vorhergehenden Ansprüche enthaltend ein oder mehrere Pfropfpolymerisate von
B.1 5 bis 95 Gew.-%, wenigstens eines Vinylmonomeren auf
B.2 95 bis 5 Gew.-% einer oder mehrerer Pfropfgrundlagen mit Glasübergangstemperaturen < 10°C.

7. Formmassen gemäß Anspruch 6, enthaltend als Vinylmonomere B.1 Gemische aus
B.1.1 50 bis 99 Gew.-Teilen Vinylaromaten und/oder kernsubstituierten Vinylaromaten und/oder (Meth)Acrylsäure-(C₁-C₈)-Alkylester und
B.1.2 1 bis 50 Gew.-Teilen Vinylcyanide und/oder (Meth)Acrylsäure-(C₁₋C₈)-Alkylester und/oder Derivate ungesättigter Carbonsäuren.

8. Formmassen gemäß einem der vorhergehenden Ansprüche, enthaltend als Pfropfgrundlage B.2 einen Dienkautschuk, Acrylatkautschuk, Silikonkautschuk doer Ethylen-Propylen-Dien-Kautschuk oder Mischungen daraus.

9. Formmassen gemäß einem der vorhergehenden Ansprüche, wobei Y in Formel (I) für Isopropyliden oder Methylen steht.

10. Formmassen gemäß Anspruch 9, wobei Y in Formel (I) für Isopropyliden steht.

11. Formmassen gemäß einem der vorhergehenden Ansprüche, enthaltend Vinyl(co)Polymerisate von mindestens einem Monomeren aus der Gruppe der Vinylaromaten, Vinylcyanide, (Meth)Acrylsäure-(C₁-C₈)-Alkylester, ungesättigte Carbonsäuren sowie Derivate (wie Anhydride und Imide) ungesättigter Carbonsäuren.

12. Formmassen nach einem der vorhergehenden Ansprüche, enthaltend mindestens einen Zusatz aus der Gruppe der Stabilisatoren, Pigmente, Entformungsmitteln, Fließhilfsmittel und/oder Antistatika, Füll- und Verstärkungsstoffe.

13. Verwendung der Formmasssen nach einem der vorhergehenden Ansprüche zur Herstellung von Formkörpern.

14. Formkörper, erhältlich aus Formmassen nach einem der vorhergehenden Ansprüche.

## Claims

1. Graft polymer-modified polycarbonate moulding compositions containing
A) 40 to 99 parts by weight of aromatic polycarbonate and/or polyester carbonate
B) 0.5 to 60 parts by weight of graft polymer of
B.1) 5 to 95 wt.% of one or more vinyl monomers on
B.2) 95 to 5 wt.% of one or more grafting backbones having a glass transition temperature of <10°C,
C) 0 to 45 parts by weight of at least one thermoplastic polymer selected from the group comprising vinyl (co)polymers and polyalkylene terephthalates,
D) 0.5 to 20 parts by weight of a phosphorus compound of the formula (I) 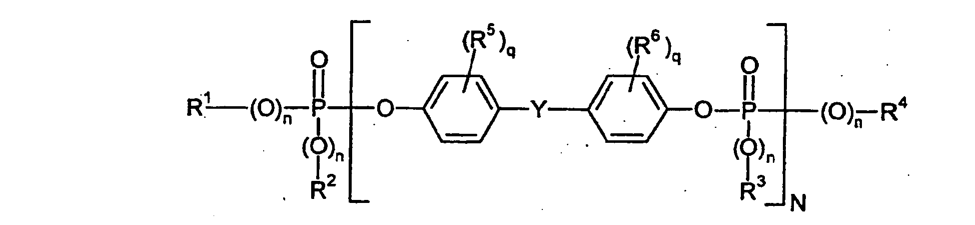 in which
R¹, R², R³ and R⁴ are mutually independently C₁-C₈ alkyl, optionally substituted by halogen, C₅-C₆ cycloalkyl, C₆-C₁₀ aryl or C₇-C₁₂ aralkyl, each optionally substituted by halogen and/or alkyl,
n are mutually independently 0 or 1,
q are mutually independently 0, 1, 2, 3 or 4,
N is 0.9 to 10,
R⁵ and R⁶ mutually independently mean C₁-C₄ alkyl or halogen,
Y means C₁-C₇ alkylidene, C₁-C₇ alkylene, C₅-C₁₂ cycloalkylene, C₅-C₁₂ cycloalkylidene, -O-, -S-, -SO-, -SO₂- or -CO-,
and
E) fluorinated polyolefin or polyolefin mixture
1) as a coagulated mixture with at least one of components A or C, wherein the fluorinated polyolefin E or polyolefin mixture is mixed as an emulsion with at least one emulsion of components A or C and then coagulated,
or
2) as a precompound with at least one of components A to C, wherein the fluorinated polyolefins E are mixed as a powder with a powder or pellets of at least one of components A to C and melt-compounded, in general at temperatures of 200°C to 330°C in conventional units such as internal kneaders, extruders or twin screw extruders.

2. Moulding compositions according to claim 1, containing 0.01 to 3 parts by weight of fluorinated polyolefin in the form of a coagulated mixture (component E.1) or as a precompound (component E.2).

3. Moulding compositions according to claim 2, containing 0.05 to 2 parts by weight of fluorinated polyolefin in the form of a coagulated mixture (component E.1) or as a precompound (component E.2).

4. Moulding compositions according to any one of the preceding claims, wherein N in the formula (I) denotes an average value of 0.95 to 5.

5. Moulding compositions according to any one of the preceding claims, wherein N in the formula (I) denotes an average value of 1 to 3.

6. Moulding compositions according to any one of the preceding claims, containing one or more graft polymers of
B.1 5 to 95 wt.% of at least one vinyl monomer on
B.2 95 to 5 wt.% of one or more grafting backbones having glass transition temperatures of < 10°C.

7. Moulding compositions according to claim 6, containing as the vinyl monomers B.1 mixtures of
B.1.1 50 to 99 parts by weight of vinyl aromatics and/or ring-substituted vinyl aromatics and/or (meth)acrylic acid (C₁-C₈)-alkyl esters and
B.1.2 1 to 50 parts by weight of vinyl cyanides and/or (meth) acrylic acid (C₁-C₈)-alkyl esters and/or derivatives of unsaturated carboxylic acids.

8. Moulding compositions according to any one of the preceding claims, containing a diene rubber, acrylate rubber, silicone rubber or ethylene/propylene/diene rubber or mixtures thereof as the grafting backbone B.2.

9. Moulding compositions according to any one of the preceding claims, wherein Y in the formula (I) denotes isopropylidene or methylene.

10. Moulding compositions according to claim 9, wherein Y in the formula (I) denotes isopropylidene.

11. Moulding compositions according to any one of the preceding claims, containing vinyl (co)polymers of at least one monomer from the group comprising vinyl aromatics, vinyl cyanides, (meth)acrylic acid (C₁-C₈)-alkyl esters, unsaturated carboxylic acids, as well as derivatives (such as anhydrides and imides) of unsaturated carboxylic acids.

12. Moulding compositions according to any one of the preceding claims, containing at least one addition from the group comprising stabilisers, pigments, mould release agents, flow auxiliaries and/or antistatic agents, fillers and reinforcing materials.

13. Use of the moulding compositions according to any one of the preceding claims for the production of mouldings.

14. Mouldings obtainable from moulding compositions according to any one of the preceding claims.

## Revendications

1. Matières à mouler à base de polycarbonate modifié par un polymère greffé contenant
A) 40 à 99 % en poids de polycarbonate et/ou carbonate de polyester aromatique
B) 0,5 à 60 parties en poids de polymère greffé de
B.1) 5 à 95 % en poids d'un ou plusieurs monomères vinyliques
B.2) 95 à 5 % en poids d'une ou plusieurs bases de greffage avec une température de transition vitreuse <10°C,
C) 0 à 45 parties en poids d'au moins un polymère thermoplastique, sélectionné parmi le groupe des (co)polymères de vinyle et des polyalkylènetéréphtalates,
D) 0,5 à 20 parties en poids d'un composé phosphoré de la formule (I) 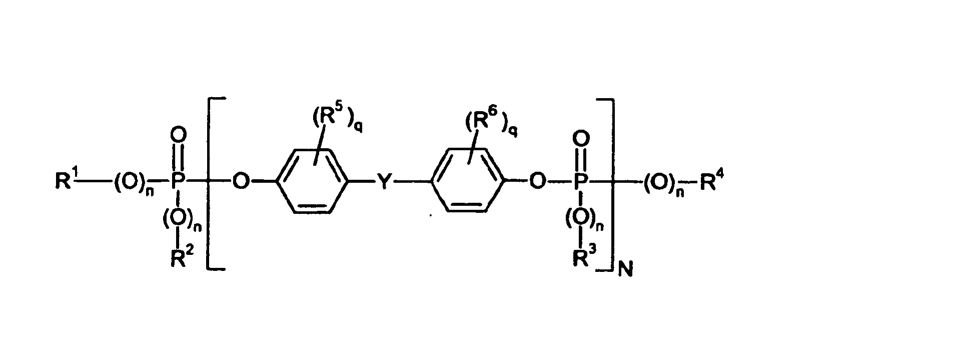 où
R¹, R², R³ et R⁴ représentent indépendamment l'un de l'autre un alkyle en C₁-C₈, le cas échéant substitué par un halogène, un cycloalkyle en C₅-C₆, un aryle en C₆-C₁₀ ou un aralkyle en C₇-C₁₂, respectivement le cas échéant substitué par un halogène et/ou un alkyle
n indépendamment l'un de l'autre 0 ou 1,
q indépendamment l'un de l'autre 0, 1, 2, 3 ou 4,
N vaut 0,9 à 10,
R⁵ und R⁶ indépendamment l'un de l'autre un alkyle en C₁-C₄ ou un halogène,
Y représente un alkylidène en C₁-C₇, un alkylène en C₁-C₇, un cycloalkylène en C₅-C₁₂, un cycloalkylidène en C₅-C₁₂, -O-, -S-, -SO-, -SO₂- ou -CO-,
et
E) une polyoléfine ou un mélange de polyoléfines fluorées
1) comme mélange coagulé avec au moins un des composants A ou C, la polyoléfine fluorée E ou le mélange de polyoléfines étant mélangé sous forme d'émulsion avec au moins une émulsion des composants A ou C et ensuite coagulé
ou
2) comme précompound avec au moins un des composants A à C, les polyoléfines fluorées E étant mélangées sous forme de poudre avec une poudre ou un granulat d'au moins un des composants A à C et combinées dans la masse fondue, en général à des températures de 200°C à 330°C dans les dispositifs habituels tels que des malaxeurs, des extrudeuses ou des boudineuses à deux vis.

2. Matières à mouler suivant la revendication 1, contenant 0,01 à 3 parties en poids de polyoléfine fluorée sous la forme d'un mélange coagulé (composant E.1) ou d'un précompound (composant E.2).

3. Matières à mouler suivant la revendication 2, contenant 0,05 à 2 parties en poids de polyoléfine fluorée sous la forme d'un mélange coagulé (composant E.1) ou d'un précompound (composant E.2).

4. Matières à mouler suivant l'une des revendications précédentes, N ayant dans la formule (I) une valeur moyenne de 0,95 à 5.

5. Matières à mouler suivant l'une des revendications précédentes, N ayant dans la formule (I) une valeur moyenne de 1 à 3.

6. Matières à mouler suivant l'une des revendications précédentes contenant un ou plusieurs polymères greffés de
B.1 5 à 95 % en poids d'au moins un monomère vinylique sur
B.2 95 à 5 % en poids d'une ou plusieurs bases de greffage avec une température de transition vitreuse <10°C.

7. Matières à mouler suivant la revendication 6, contenant comme monomères vinyliques B.1 des mélanges de
B.1.1 50 à 99 parties en poids de composés aromatiques vinyliques et/ou de composés aromatiques vinyliques substitués sur le noyau et/ou de (méth)acrylate d'alkyle en C₁-C₈ et
B.1.2 1 à 50 parties en poids de cyanures vinyliques et/ou de (méth)acrylate d'alkyle en C₁-C₈ et/ou de dérivés d'acides carboxyliques non saturés.

8. Matières à mouler suivant l'une des revendications précédentes, contenant comme base de greffage B.2 un caoutchouc diénique, un caoutchouc d'acrylate, un caoutchouc silicone ou un caoutchouc d'éthylène-propylène-diène ou des mélanges de ceux-ci.

9. Matières à mouler suivant l'une des revendications précédentes, Y dans la formule (I) représentant l'isopropylidène ou le méthylène.

10. Matières à mouler suivant la revendication 9, Y dans la formule (I) représentant l'isopropylidène.

11. Matières à mouler suivant l'une des revendications précédentes, contenant des (co)polymères de vinyle d'au moins un monomère du groupe des composés aromatiques vinyliques, des cyanures vinyliques, des (méth)acrylate d'alkyles en C₁-C₈, des acides carboxyliques non saturés ainsi que des dérivés (tels que les anhydrides et les imides) d'acides carboxyliques non saturés.

12. Matières à mouler suivant l'une des revendications précédentes, contenant au moins un additif du groupe des stabilisateurs, pigments, agents de démoulage, agents fluidifiants et/ou agents antistatiques, des matières de charge et de renforcement.

13. Utilisation des matières à mouler suivant l'une des revendications précédentes pour la fabrication de corps moulés.

14. Corps moulés, réalisables à partir des matières à mouler suivant l'une des revendications précédentes.
